# EUROPEAN PATENT APPLICATION

(11) **EP 4 272 862 A1**
(43) Date of publication of application: **08.11.2023**
(21) Application number: 22171802.6
(22) Date of filing: 05.05.2022
(51) Int. Cl.: B01J 20/34

(54) **ADSORBENT FOR REMOVING CONTAMINANTS FROM PYROLYSIS OIL**

(71) Applicant: Clariant International Ltd, 4132 Muttenz (CH)
(72) Inventor: Hartmann, Timo, 85221 Dachau (DE); Celinski, Vinicius Ribeiro, 80686 München (DE); Karpynec, Nina, 84545 München (DE); Werner, Andreas, 85435 Erding (DE)
(74) Representative: Silber, Anton

(57) **Abstract**

The present invention concerns the use of an adsorbent composition in removing impurities from hydrocarbon feedstocks, and a method for regenerating the adsorbent after use.

## Description

The present invention concerns the use of an adsorbent composition in removing impurities from hydrocarbon feedstocks, and a method for regenerating the adsorbent after use.

Plastic waste today is still largely landfilled or incinerated for heat generation. Although mechanical recycling might be preferred, since it enables a more sustainable reuse of resources, there are still waste streams left where chemical recycling can be an attractive alternative to reach the recycling targets set by many countries. It encompasses converting waste plastic material into useful chemicals. An important method for chemically recycling plastic waste is pyrolysis. Pyrolysis is a thermal degradation of plastic waste in an inert atmosphere. It yields products such as pyrolysis gas, liquid pyrolysis oil and char. Depending on the process conditions, pyrolysis oil can be the major product fraction and producers seek to maximize its content in the product mix. Pyrolysis gas and char can be used as fuel for generating heat, e.g., for reactor heating. The pyrolysis oil can be used as a source for syngas production or can be processed into chemical feedstock such as ethylene, propylene, C4 cuts, etc., for example by (steam) cracking.

Plastic waste typically is mixed plastic waste composed of different types of polymers. The polymers are often composed of carbon and hydrogen in combination with other elements such as chlorine, fluorine, sulfur, and nitrogen that complicate recycling efforts. The elements other than carbon and hydrogen may be harmful during the further processing of the crude pyrolysis oil, since they may de-activate or poison catalysts used in the further processing of the pyrolysis oil and are therefore often referred to as contaminants. During (steam-) cracking, halogen-containing compounds can damage the cracker by corrosion in that they release hydrogen halide. Similar corrosion issues are reported for equipment up- and downstream of the cracker, such as heat exchangers, storage vessels etc. Sulfur-containing compounds can de-activate or poison catalysts used in the cracker or can contaminate the cracker products. Nitrogen-containing impurities may also poison downstream catalysts, or they may form explosive NOx when heated. When mixed plastics containing polyvinyl chloride (PVC) are thermally degraded, compounds having double carbon bonds and hydrogen chloride is formed. The hydrogen chloride liberated from PVC attacks the compounds having carbon-carbon double bonds leading to the formation of chloro-organic compounds. Plastic waste typically contains heteroatom-containing additives such as pigments, stabilizers and plasticizers that have been incorporated to improve the performance of the polymers. Such additives also often comprise nitrogen, halogen and sulfur containing compounds and heavy metals. For example, waste engine oils, transformer oils, hydraulic oils and machine oils may contain heavy metal abrasion. Pyrolysis oil might also contain metals like iron (Fe) and metal oxides or other contaminants like phosphorus (P). The (heavy) metals are often toxic, and the quality of the pyrolysis oil is reduced by the presence of (heavy) metals, metal oxides and other impurities. Furthermore, plastic waste often may be uncleaned plastics with residue that may also contain elements other than carbon and hydrogen. Therefore, the reduction of the nitrogen, oxygen, phosphorus, sulfur, and halogen content in the pyrolysis oil as well as the (heavy-)metal content is essential for any meaningful processing of the pyrolysis oil. Especially, a high-quality pyrolysis oil rich in carbon and hydrogen and low in contaminants is preferred as feedstock to prevent catalyst deactivation and corrosion problems in downstream refinery processes.

Apart from plastics waste, in many cases also recycled or renewable organic material contains unwanted contaminants, such as e. g. organic oxygen and chlorine, which need to be removed from the material before catalytic treatment of the recycled or renewable organic material since such contaminants can have negative effects on the catalyst and/or can cause corrosion to process equipment, similar to the problems described *supra* for plastics waste.

Accordingly, numerous processes have been described that suggest removing the contaminants from plastics waste, recycled or renewable materials, many of them using different types of solid adsorbent materials in a purification step.

WO2020020769A1 (Neste) discloses a method of purifying a recycled or renewable organic material (such as e. g. plant-based fats and oils, animal-based fats and oils, fossil waste-based oils, waste oils, algal oils, and microbial oils) which contains chloride (as chloride salts or as organic chloride compounds) a contaminant. The recycled or renewable organic material is first purified and then hydrotreated in the presence of a hydrotreating catalyst at elevated temperatures (270 to 380°C) under pressure (from 4 to 20 MPa) and under continuous hydrogen flow to obtain purified hydrotreated recycled or renewable organic material. The method allows use of low quality recycled or renewable organic material feeds as a feedstock in hydrotreating, e. g. in processes producing high quality renewable fuels and/or chemicals. The purification step can be carried out by using a solid adsorbent material, typically selected from silica-based adsorbents such as Trisyl silica or selected from metal chlorides or metal oxides. After the purification pretreatment step, the adsorbent material is removed from the recycled or renewable organic material, e. g. by filtration, centrifugation, and phase separation. WO2020020769A1 is silent with respect to adsorbent regeneration and - apart from mentioning Trisyl silica - does not disclose specific adsorbent details.

WO2021255591A2 (Sabic) discloses systems and methods of processing pyrolysis oil. The pyrolysis oil is treated by an adsorbent to trap, and/or adsorb contaminants (such as gum and/or gum precursors and other heteroatom containing components, specifically oxygen containing compounds, nitrogen containing compounds, chlorine containing compounds, polynuclear aromatics and heavy tails (C20+), silicon containing compounds, and heavy metals), thereby removing the contaminants from the pyrolysis oil and producing a purified pyrolysis oil. The adsorbent treatment of the pyrolysis oil can be carried out at temperatures between 10 and 100 °C and at pressures between 0.1 and 10 bar. The purified pyrolysis oil can then be cracked to produce chemicals including olefins and aromatics. The adsorbent can be an activated charcoal (carbon), a molecular sieve, a bleaching clay, a silica hydrogel, an ionic resin, a cured eggshell powder, or combinations thereof, and can be contained in a guard bed, a purification column, a stirring tank, and/or a fluidized bed. The adsorbent can be removed from the purified pyrolysis oil via settling, filtration, cyclone, or combinations thereof. WO2021255591A2 proposes that the adsorbent can be regenerated via thermal regeneration, thermal and vacuum regeneration, rinsing with strong acid or strong basic solutions, solvent rinsing of the adsorbent (e. g. with polar organic solvent such as tetrahydrofuran (THF)), or combinations thereof. WO2021255591A2 gives no details regarding the mentioned regeneration and other than specifically suggesting activated carbon or molecular sieves gives no experimental data for other adsorbents.

EP3907267A1 (BASF) describes a process for purifying a crude nitrogen-containing, sulfur-containing and halogen-containing pyrolysis oil originating from the pyrolysis of plastic waste, by subjecting the crude pyrolysis oil to a treatment with an adsorbent material which can be activated carbon, alumina, silica, clay materials, zeolites, ion exchange resins, absorbent organic polymers or a combination thereof. Contaminants such as nitrogen-containing, sulfur-containing, halogen-containing and, if present, heavy metal containing compounds may be removed either by physisorption and/or chemisorption from the crude pyrolysis oil. Adsorbent beds can be operated at 15 to 35 °C and at 0.9 to 1.1 atm. The adsorbed material may be removed from the adsorbent by using a selected desorbent, i. e., a material which can displace the sorbate components of the crude pyrolysis oil, such as a polar solvent (e.g., C1 -C6 -alkanols), to regenerate the adsorbent material. Amberlyst resins used as adsorbent materials may be regenerated with acids, activated carbon may be regenerated by thermal treatment using hot steam or nitrogen. The purified pyrolysis oil may be used to produce syngas or hydrocarbon compounds having a lower molecular weight than a pyrolysis oil by (steam-) cracking the purified pyrolysis oil.

US2009/0156876A1 (ExxonMobil) describes an apparatus and process for thermally cracking hydrocarbon feeds containing relatively non-volatile hydrocarbons, also known as paraffin insoluble compounds. These paraffin-insoluble compounds are selectively removed with solid particulate adsorbents, prior to cracking. Examples of solid particulate adsorbents are activated carbon and inorganic oxides, in particular crystalline inorganic oxide molecular sieves, activated alumina, silica, aluminosilicate, clay, and Fuller's Earth. An aromatics-containing stream such as one derived from cracked product is used to desorb the paraffin insoluble compounds from the adsorber stage, thereby regenerating the adsorbent, at temperatures from 10 to 400 °C and pressures from 0 to 2760 kPa. US2009/0156876A1 is not related to recycled or renewable organic hydrocarbon feedstocks.

There is a continuing need for alternative and improved processes and suitable adsorbent materials to sustainably remove contaminants from organic feedstocks, in particular hydrocarbon feedstocks, and especially for recycled or renewable organic material.

It is an objective of the present invention to provide a suitable adsorbent composition for use in purifying crude hydrocarbon feedstocks so that the shortcomings of the prior art approaches are overcome. Also, the present invention provides for a simple method to prolong the usable lifetime of the adsorbent composition.

This and other objectives of the invention are solved by the subject matter of the independent claims. Further and preferred embodiments of the invention are the subject matter of the dependent claims.

A first object of the invention is the use of an adsorbent composition for removing impurities from hydrocarbon feedstocks. The adsorbent composition comprises an inorganic, at least partially amorphous material selected from the group consisting of minerals, clays, silicates, aluminates, and mixtures thereof. The partly amorphous material has a surface area (according to ASTM UOP964-11) of at least 150 m²/g, pore sizes (according to ASTM UOP964-11 from 1 to 10 nm, preferably 1 to 4 nm, and from 50 to 350 µmol/g acid sites (according to NH₃ TPD 150-350°C).

In the context of the present invention, the adsorbent composition is a solid, at least partially amorphous inorganic material. "At least partially amorphous" shall mean that there is part of the material without some long-range order regarding the crystal structure of the material. In contrast to completely amorphous materials which basically show no reflexes in x-ray diffraction measurements, at least partially amorphous materials show such reflexes (indicating a certain degree of crystallinity). The partially crystalline or amorphous character of the solid inorganic material can accordingly be determined by x-ray diffraction.

The adsorbent composition of the present invention is selected from the group consisting of minerals (including clays, natural silicates and natural aluminates), synthetics silicas and synthetic aluminates, and mixtures thereof.

In particular, suitable minerals are sheet silicates of the kaolin group (e.g., Kaolin), of the smectite group (e.g., Montmorillonite) or other clay minerals (e.g., Palygorskite) with exposed or exposable two- and/or three-valent metal cations and silanol groups on the mineral surface. The pore size or layer distance of those minerals should be larger than 0.4 nm during the application without collapsing. Furthermore, synthetic silica featuring exposed silanol groups, especially on the outer particle surface, as well as synthetic aluminates (usually containing porous gamma phase alumina) are suitable materials for the present invention. All the above materials can also be used as mixtures thereof.

Suitable adsorbent materials can also be regenerated as described when present in mixtures thereof or other solid materials, since the reactions between the feedstock and a given adsorbent material happen on its surface on a microscopic scale delivering for purification active regenerated particles. For example, a 1:1 mixture of acid activated bentonite and alumina can also be regenerated.

The adsorbent composition of the present invention has a surface area (according to ASTM UOP964-11) of at least 150 g/m². To be optimally suited as an adsorbent composition for use in removing the typical impurities from hydrocarbon feedstock, the surface area is between 150 m²/g and 450 m²/g.

It has turned out that for the adsorbent composition being suited for the use according to the invention, the main fraction of its pores should be in the range from 1 to 10 nm (measured according to gas porosimetry using nitrogen as a probe molecule), ideally from 1 to 5 nm.

Likewise, the adsorbent composition has from 50 to 350 µmol/g acid sites (according to NH₃ TPD 150-350°C).

Ideally, the adsorbent composition has an average primary particle diameter (D50) (according to laser diffraction) of 0.1 to 100 µm.

In a preferred embodiment, the adsorbent composition comprises lattice defects, ranging from point defects (e.g., substitutional as in Fe for Al), over plane defects (e.g. planar as stacking faults) to three-dimensional defects (e.g. pores) that can e.g. be determined by X-ray diffraction and NMR.

In a further refinement of the invention, the adsorbent composition comprises magnesium, aluminum and/or transition metals and/or their oxides and or/mixtures thereof. The metal component in the adsorbent material contributes to active sites, in particular to the acid sites.

### Suitable materials can be Trysil (synthetic silica, available from Grace), Tonsil CO 616 GS/L (a clay mineral available from Clariant), and γ-Alumina (synthetic aluminate, such as from Alfa Aesar)

Suitable hydrocarbon feedstocks for the use according to the invention comprise pyrolysis oil from waste plastics (e.g. from post-consumer waste, such as sorted waste streams, and industrial waste from different applications such as foil or consumer goods production, electronics, engineering polymers), waste tires, biomass (e.g. wood or lignin based biomass, used cooking oils, animal fat), also containing paper or cardboards, general domestic waste comprising plastics waste and non-plastic waste.

Further suitable hydrocarbon feedstocks are used cooking oils and animal fat.

Another suitable hydrocarbon feedstock comprises waste polymers dissolved in a suitable solvent or its monomer solution with at least 10 wt.-% polymer share.

In general, it is preferred that the hydrocarbon feedstock comprises at least 25 wt.-% polymer content.

The term "hydrocarbon feedstock" also encompasses mixtures of the different feedstocks.

The use according to the invention is suited to remove impurities or contaminants comprising inorganic and organic nitrogen (e.g. amines), organic oxygen (e.g. organic acids), inorganic and organic chlorine (organic chloro- and/or chloride compounds), and organic silicon compounds (e.g. siloxanes). It has turned out that the use of the invention is particularly suited to remove 2 or more of these compounds at the same time. Preferably, both the content of oxygen and chlorine compounds is reduced.

A person of skill in the art will understand that "remove impurities" does not mean that the content of such impurities or contaminants is reduced to zero. In the context of the present invention, removing impurities means substantially reducing the content of such impurities to less than 90%, preferably less than 60% of its original content. A person of skill in the art will also be aware that such impurities removal depends on the type of feedstock, the type and dosage of adsorbent material, and the conditions of the contact (such as duration, pressure, temperature) and can be adjusted to the needs.

With the use according to the invention it is possible to purify hydrocarbon feedstocks of lower quality so that they can be refined and transformed to lighter fractions, e.g. by cracking.

Another object of the invention is a method of regenerating the adsorbent composition of the invention after its use. The regeneration method comprises heating the adsorbent composition at a temperature of 250 to 450 °C in an oxygen containing or inert gas atmosphere at a pressure of 0 to 3 hPa for a time of up to 360 min, preferable from 60 to 180 min. The method according to the invention is more sustainable than other methods in that it operates in comparably low temperature ranges and avoids the use of aromatics containing streams, acids or organic solvents that are needed in solvent desorption regeneration methods described in the state of the art.

The gas can be air, carbon monoxide, carbon dioxide, nitrogen or Argon, or mixtures thereof, or a mixture of the said gases with small amounts, typically 0.1 vol.-% to 21 vol.%, of oxygen.

The method of regenerating and the adsorbent composition allow for oxygen-free regeneration of the material. Oxygen-free regeneration has the advantage that deposited carbon compounds (coke) is not transformed into carbon dioxide, thus reducing the carbon dioxide emission and keeping the carbon in the process cycle.

To arrive at the final regeneration temperature of 250 to 450 °C, ideally a heating rate of approximately 1 to approximately 10 K/min is employed. Such comparably slow temperature rises are easier to manage from a technical perspective than faster temperature changes. In addition, the comparably slow temperature increases tend to aid in reducing/removing coke deposits from the adsorbent material.

In a further embodiment of the method according to the invention the temperature is maintained at different ranges for a specific time period. For example, the temperature is maintained for 15 min at 175 °C followed by 45 min at 250 °C.

It has turned out that the adsorbent composition of the invention can be regenerated several times without major impact on its adsorbent properties for removing impurities from hydrocarbon feedstocks. Contaminants can be removed from pyrolysis oil or other hydrocarbon feedstocks and the adsorption or removal capacity for those impurities can be (at least partially) restored for multiple cycles, preferably at least for 5 cycles.

### BRIEF DESCRIPTION OF THE DRAWINGS

Fig.1 shows the schematic general experimental setup used for the adsorption and regeneration experiments.
Fig. 2 shows a diagram plotting the relative adsorption capacity (REL. ADS. CAP., in %) of a regenerated adsorbent material sample compared to the original adsorption capacity in relation to the regeneration temperature (T, in °C) for different regeneration times (15 min to 360 min).
Fig. 3 shows a diagram plotting the relative chlorine uptake (CI Up., in %) versus the mass related turnover (MTO, in g/g) for virgin and 1 to 5 times regenerated (Reg 1 to Reg 5) adsorbent material sample.

### EXAMPLES

The invention and its benefits will further be explained by the following experimental examples.

The following analytical methods have been used:
Ammonia temperature-programmed desorption (NH₃ TPD 150-350°C) is performed as a desorption experiment after flooding the sample with Ammonia by increasing the temperature linearly from 150 °C to 350 °C, letting a steady stream of inert gas pass through the sample and recording the amount of desorbed ammonia.

The following test methods have been used:
Setup and Conditions

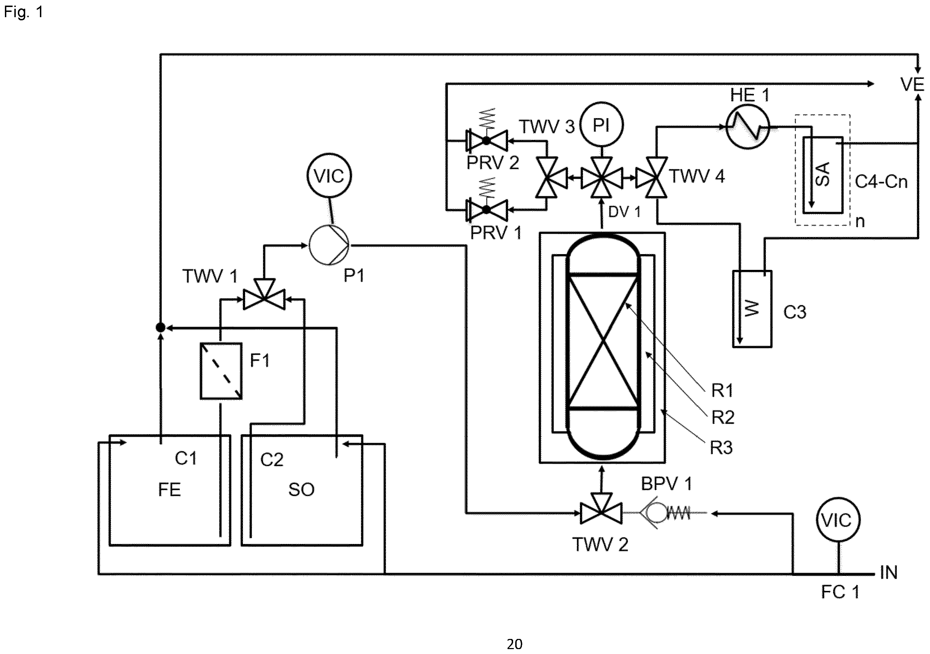

The general setup and process flow chart is shown in Fig. 1 in which the used abbreviations have the following meaning:
- IN: Gas inlet
- FC 1: Flow controller 1 (for gas supply; 0.1-1 l/h)
- VIC: Volume indicating flow controller
- BPV 1: Backpressure valve 1 (avoids liquid flow into gas section)
- TWV 1/2/3/4: Three-way valve 1/2/3/4
- R 1/2/3: Reactor module 1/2/3
- DV 1: Distributor valve 1
- PI: Pressure indicator
- PRV 1/2: Pressure release valve 1/2
- HE 1: Heat exchanger tube 1
- SA: Sample
- C1/2/3/4/n: Container 1/2/3/4/n
- VE: Ventilation (gas outlet)
- FE: Feedstock
- SO: Solvent
- W: Waste
- F1: Filter module 1
- P1: Pump 1

The fixed bed reactor module (R1-3) with an inner core R1 holds the adsorbent material and can be removed (e.g., for transportation or rapid exchange). The inner core R1 had an approximate inner volume of 8 ml, an inner diameter of 10 mm and was filled with approximately 5 ml of adsorbent material, held in place by quartz wool. At the inlet side, appr. 2 ml of glass beads (500 µm diameter) formed a pre-heating zone and at the outlet side appr. 0.5 ml of the same glass beads were placed to form a post reaction cooldown zone, the glass beads also held in place by quartz wool.

The fixed bed reactor was used for adsorption and regeneration experiments with various feedstocks.

Before the adsorption experiment, the adsorbent was dried at 120 °C for 20 minutes under constant nitrogen flow (1 l/h), set to adsorption temperature for 1 h under nitrogen flow (0,2 l/min).

Adsorption was performed with a constant liquid hourly space velocity (LHSV) of ~ 1 at the temperatures given below (mostly at 120 °C) and at slightly elevated pressure (1.4 bar) for experiments above the boiling point of the pyrolysis oil samples. Samples were collected during the adsorption step by filling sample flasks with treated feedstock, after the desired dwell time in the reactor column, until the set maximum level was reached. After filling one sample flask, the feedstock flow was automatically directed into the next sample flask. The whole treated feedstock was filled into the sample flasks, the bypass valve was not used until the last vial was sufficiently filled.

Regeneration was initiated after 4 samples with ~ 25 ml each were taken. The oil flow was stopped, the column supplied with nitrogen instead (1 l/h) and the reactor outlet set to the waste flask. After most of the oil was removed from within the adsorbent bed (after ~ 30 seconds) the temperature was adjusted to regeneration temperature as given below (mostly 250 -300 °C). When the target regeneration temperature was reached, the regeneration timer was started. Heating rates were appr. 10 K/min and constant for all experiments. Gas hourly space velocity (GHSV) was around 12,000 (generally between 1,000 and 20,000 to allow for gas contact times of 5 s or less, ideally 3 s or less).

After the regeneration was finished, the nitrogen flow rate was reduced to 0.1 l/ min, the experiment temperature dropped to room temperature and the next cycle started on the following day by preheating to adsorption temperature for 1 h.

### Examples

Adsorbent material samples that were tested and analyzed regarding their most important properties are summarized in Table 1:

**Table 1: Adsorbent sample material properties**

| Material | Micropore area [m²/g] | Micropore volume [cm³/g] | BET Surface area [m²/g] | Pore volume (13-210A) [cm³/g] | Pore area (13-210A) [m²/g] | Fe₂O₃ content [%] | Al₂O₃ content [%] | Total Acidity (NH₃ TPD) | Particle size D50 [µm] | pH |
|---|---|---|---|---|---|---|---|---|---|---|
| Material 1.05 (Activated Carbon H620) comparative material | 618 | 0.307 | 836 | 0.230 | 245 | 0.14 | 1.0 | | 831 | 5.4 |
| Material 6.5 (acid activated Montmorillonite) | <1 | <0.001 | 292 | 0.347 | 294 | 4.1 | 13.4 | 90 | 39 | |
| Material 6.6 (acid activated Montmorillonite) | <1 | <0.001 | 276 | 0.351 | 287 | 4.0 | 12.0 | 75 | 44 | |
| Material 6.8 (partially acid activated Smectite group clay) | 29 | 0.011 | 303 | 0.272 | 278 | 3.5 | 16.6 | 142 | 565 | 3 |
| Material 3.0 (Trisyl) | <1 | <0.001 | 840 | 0.774 | 660 | 0 | 0 | | <25 | 2.6 |
| Material 7.23 (y-Al2O3) | 24 | | 255 | | | | >98 | | 2000 | |

Hydrocarbon feedstocks that have been used for testing the adsorbent materials are as follows:
Crude pyrolysis oils with varying impurity levels were used for the experiments. Oils were used as received from industrial or pilot testing processes using waste materials as feedstock, mainly consisting of polymers with other impurities from organic wastes or feedstocks. The samples were stored under nitrogen blanketing at standard conditions (20-22°C).

The contaminant content of the tested feedstocks was as follows:
Feedstock 1: 250 mg/kg CI, 4200 mg/kg O, 1500 mg/kg S, 1400 mg/kg N
Feedstock 2: 20 mg/kg CI, < 500 mg/kg O, <1000 mg/kg S, < 500 mg/kg N

### Example 1: Comparison of adsorbent composition before use and after use and regeneration

X-ray powder diffractograms (using copper anode) of adsorbent composition sample Material 6.8 (an activated clay material in granular shape with small mesopores and micropores as well as Lewis acid sites from transition metals and aluminum) measured before and after use (120°C, 1.4 bar total pressure) in removing impurities from pyrolysis oil feedstock and subsequent regeneration (300°C, 1 bar total pressure, 1l/min N2 flow) basically show identical X-ray powder diffractograms, indicating that the structure of the composition remains intact after use and thermal regeneration.

### Example 2: Determination of suitable temperature and time for regeneration of adsorbent

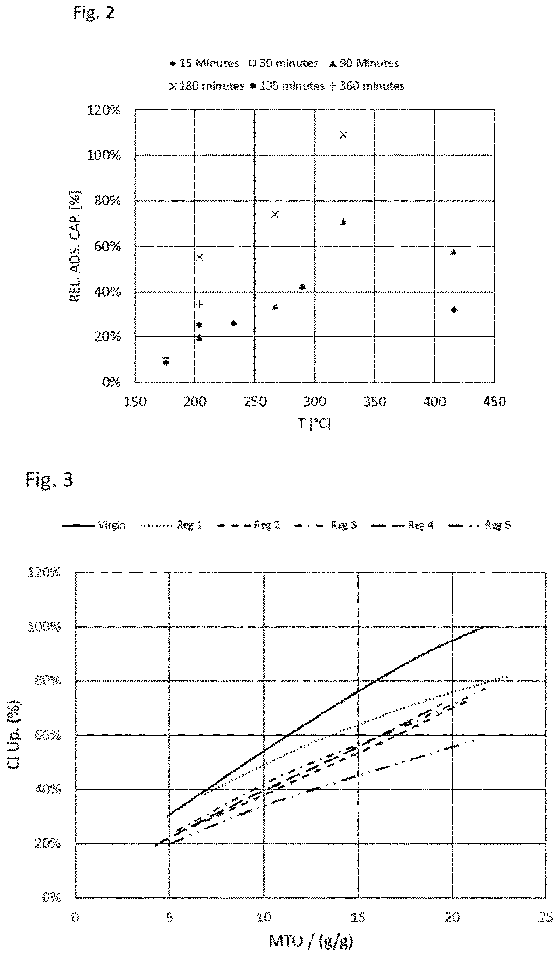

The regeneration of a used adsorbent sample (Material 6.5) was tested using the apparatus and general method described above. The relative adsorption capacity of the used, regenerated material was quantified by measuring the absorption of a UV-detectable small molecule (Fe(acac)₃) relative to that of the initial raw material. The results are shown in Fig. 2.

The adsorption capacity restoration is increasing with temperature and for the selected adsorbent sample material has a maximum between 300 °C and 400 °C. The adsorption capacity restoration tends to decrease with temperatures above 400 °C. Temperatures below 200 °C do not seem to allow a meaningful adsorption capacity restoration.

Varying the regeneration times indicates that longer regeneration times up to appr. 180 min improve the adsorption capacity restoration; longer times even seem to have a deteriorating effect (see the measurement at 360 min).

For the given adsorbent material sample, the preferred temperature range is between 200 °C and 400 °C and the preferred regeneration time is between 60 min and 180 min.

### Example 3: Fixed bed adsorption of chlorine contaminants using Feedstocks 1 and 2 and regeneration of adsorbent material

The regeneration of a used adsorbent sample (M6.8) was tested using the apparatus and general method described above. In experiments using Feedstock 1 (described above), chlorine uptake from the feedstock was measured at a temperature of 120 °C, a LHSV of 1, and at a pressure of 1.4 bar. Chlorine uptake (mg Chlorine/g adsorbent) was recorded for mass related turnover (g feed/g adsorbent) between 5 and 25 and lay in the range between 0.2 and 1.4.

The experiments with Feedstock 1 showed that regeneration times below 60 min can restore chlorine capacity partially; chlorine uptake capacity can be restored completely between 60 min and 120 min. Shortening regeneration times or lowering temperatures can lead to loss in adsorption capacity. Multiple regeneration cycles can be performed.

Adsorbent sample material M6.8 was used for chlorine contaminant removal from Feedstock 2 (described above) using the apparatus and general method described above. Chlorine uptake from the feedstock was measured at a temperature of 120 °C, a LHSV of 1, and at a pressure of 1.4 bar. The relative chlorine uptake (in % compared to the original chlorine content) was recorded for mass related turnover (g feed/g adsorbent) between 5 and 25 using the fresh (Virgin) adsorbent material and after 1 to 5 regeneration cycles (Reg. 1 to 5; regeneration at 300 °C for 2 h using nitrogen and gas at a GHSV of 12,000). The relative chlorine uptake is shown in Fig. 3 and lay in the range between 20 % and 100 %.

As the data show, the chlorine uptake capacity of the tested material can be successfully restored over 5 regeneration cycles for different hydrocarbon feedstocks. As to be expected, optimal regeneration temperature depends on feedstock composition, but generally temperatures of between 250 °C and 410 °C are preferred, and a regeneration temperature of about 300 °C appears to be best suited for restoration of the chlorine uptake capacity of the tested adsorbent material. Regeneration times of up to 120 min can restore chlorine capacity, and work best between 60 min and 120 min.

### Example 4: Fixed bed adsorption of oxygen contaminants using Feedstock 1 and regeneration of adsorbent material

The regeneration of a used adsorbent sample (M6.8) was tested using the apparatus and general method described above. In experiments using Feedstock 1 (described above), oxygen uptake from the feedstock was measured at a temperature of 120 °C, a LHSV of 1, and at a pressure of 1.4 bar. Oxygen uptake (mg oxygen/g adsorbent) was recorded for mass related turnover (g feed/g adsorbent) between 5 and 25 and lay in the range between -15 and +25.

The experiments with Feedstock 1 showed that regeneration times between 30 min and 120 min and regeneration temperatures of 250 °C to 300 °C can restore the oxygen uptake capacity, with better results for longer times (120 min being preferred). Shortening regeneration times or lowering temperatures can lead to loss in adsorption capacity. Multiple regeneration cycles can be performed. Surprisingly, the oxygen uptake capacity of the adsorbent can be improved even vs. the virgin material when regenerated under optimal conditions (regeneration time 120 min; regeneration temperature 300 °C).

### Example 5: Fixed bed adsorption of nitrogen contaminants using Feedstock 1 and regeneration of adsorbent material

The regeneration of a used adsorbent sample (M6.8) was tested using the apparatus and general method described above. In experiments using Feedstock 1 (described above), nitrogen uptake from the feedstock was measured at a temperature of 120 °C, a LHSV of 1, and at a pressure of 1.4 bar. Nitrogen uptake (mg nitrogen/g adsorbent) was recorded for mass related turnover (g feed/g adsorbent) between 5 and 25 and lay in the range between 2 and 18.

The experiments with Feedstock 1 showed that regeneration times between 30 min and 120 min and regeneration temperatures between 250 °C and 300 °C can restore the nitrogen uptake capacity, with better results for shorter times (30 min to 60 min being preferred) and higher temperatures (300 °C or more being preferred). Lowering temperatures can lead to loss in adsorption capacity. Multiple regeneration cycles can be performed.

### Example 6; Fixed bed adsorption of contaminants (chlorine, oxygen) using Feedstock 1 and regeneration of adsorbent material (AC (H620)) - Comparative Example

In analogy to examples 3 and 4, chlorine and oxygen contaminant removal from Feedstock 1 (as described above) was measured using an activated carbon (AC H620) as adsorbent material as a comparative example. At the experimental conditions used (temperature of 120 °C, a contact time of 5 min, and a pressure of 1.4 bar) the used material showed slight chlorine contaminant uptake (between 0.1 and 0.22 mg chlorine/g adsorbent at a mass related turnover (g feed/g adsorbent) between 5 and 35) only for the virgin material. The virgin material did not show any oxygen contaminant uptake. A thermal regeneration was not possible for both contaminants.

### Example 7: Fixed bed adsorption of contaminants (chlorine, oxygen) using Feedstock 1 and regeneration of adsorbent material (Trisyl (silica))

In analogy to examples 3 and 4, chlorine and oxygen contaminant removal from Feedstock 1 (as described above) was measured using a silica (Trisyl) as adsorbent material. At the experimental conditions used (temperature of 120 °C, a contact time of 5 min, and a pressure of 2 bar) the used material showed good chlorine and oxygen contaminant uptake (chlorine contaminant uptake between 0.4 and 1 mg chlorine/g adsorbent at a mass related turnover (g feed/g adsorbent) between 10 and 60; oxygen contaminant uptake between 20 and 90 mg oxygen/g adsorbent at a mass related turnover (g feed/g adsorbent) between 10 and 60).

Thermal regeneration (300°C, 1 bar total pressure, 1l/min N₂ flow) of the adsorbent was possible for both contaminants.

### Example 8: Fixed bed adsorption of oxygen contaminants using Feedstock 1 and regeneration of adsorbent material (Material 6.6 (highly activated bentonite clay))

In analogy to example 4, oxygen contaminant removal from Feedstock 1 (as described above) was measured using a highly activated bentonite clay (Tonsil Supreme 114FF from Clariant) as adsorbent material. At the experimental conditions used (temperature of 120 °C, a contact time of 5 min, and a pressure of 2 bar) the used material showed good oxygen contaminant uptake (between 5 and 35 mg oxygen/g adsorbent at a mass related turnover (g feed/g adsorbent) between 5 and 30). Thermal regeneration (at a temperature of 300°C, a total pressure of 1 bar, and a gas (N₂) flow of 1l/min) of the adsorbent was possible.

### Example 9: Fixed bed adsorption of contaminants (chlorine, oxygen) using Feedstock 1 and regeneration of adsorbent material (mesoporous γ-alumina)

In analogy to example 7, chlorine and oxygen contaminant removal from Feedstock 1 (as described above) was measured using a highly mesoporous γ-(gamma-)alumina (Alfa Aesar) as adsorbent material. At the experimental conditions used (temperature of 120 °C, a contact time of 5 min, and a pressure of 2 bar) the used material showed good chlorine and oxygen contaminant uptake (chlorine contaminant uptake between 0.35 and 0.75 mg chlorine/g adsorbent at a mass related turnover (g feed/g adsorbent) between 10 and 50; oxygen uptake between 15 and 80 mg oxygen/g adsorbent at a mass related turnover (g feed/g adsorbent) between 10 and 50). Thermal regeneration (300°C, 1 bar total pressure, 1l/min N2 flow) of the adsorbent was possible for both contaminants.

## Claims

1. Use of an adsorbent composition for removing impurities from hydrocarbon feedstocks, the adsorbent composition comprising an inorganic, at least partially amorphous material selected from the group consisting of minerals, synthetic silicas, synthetic aluminates, and mixtures thereof, **characterized in that** the material has
- a surface area (according to ASTM UOP964-11) of at least 150 m²/g,
- pore sizes (according to ASTM UOP964-11) from 1 to 10 nm, preferably 1 to 5 nm, and
- from 50 to 350 µmol/g acid sites (according to NH₃ TPD 150-350°C).

2. The use of claim 1, **characterized in that** the mineral is a clay.

3. The use of claim 1 or 2, **characterized in that** the hydrocarbon feedstock is a pyrolysis oil obtained from waste plastics.

4. The use of any one of the preceding claims, **characterized in that** the impurities to be removed comprise organic nitrogen, oxygen, chlorine, and silicon compounds.

5. The use of any one of the preceding claims, **characterized in that** the adsorbent composition has an average primary particle diameter (D50) (measured by laser diffraction) of 0.1 to 100 µm.

6. The use of any of the preceding claims, **characterized in that** the adsorbent composition comprises lattice defects.

7. The use of any of the preceding claims, **characterized in that** the adsorbent composition comprises magnesium, aluminum and/or transition metals and/or their oxides and or/mixtures thereof.

8. Method of regenerating the adsorbent composition of any of the preceding claims after use, comprising heating the adsorbent composition at a temperature of 250 to 450 °C in an oxygen containing or inert gas atmosphere at a pressure of 0 to 3 hPa for a time of up to 360 min.

9. Method according to claim 8, **characterized in that** the heating is done for a time from 60 to 180 min.

10. Method according to claim 8 or 9, **characterized in that** the gas is air, carbon monoxide, or carbon dioxide.

11. Method according to claim 8 or 9, **characterized in that** the gas is nitrogen or argon.

12. Method according to any of the preceding claims, **characterized in that** the heating rate to arrive at the final heating temperature of 250 to 400 °C is in the range of 1 to 10 K/min.
